# EUROPÄISCHE PATENTSCHRIFT

(11) **EP 1 864 081 B1**
(45) Veröffentlichungstag und Bekanntmachung des Hinweises auf die Patenterteilung: **07.05.2014**
(21) Anmeldenummer: 06723667.9
(22) Anmeldetag: 23.03.2006
(51) Int. Cl.: G01B 11/24, G01N 21/88

(54) **VORRICHTUNG ZUR OPTISCHEN FORMERFASSUNG VON GEGENSTÄNDEN UND OBERFLÄCHEN**
DEVICE FOR OPTICALLY CAPTURING SHAPES OF OBJECTS AND SURFACES
DISPOSITIF POUR DETECTER OPTIQUEMENT LA FORME D'OBJETS ET DE SURFACES

(30) Priorität: 24.03.2005 DE 102005013614; 06.05.2005 DE 102005021896
(43) Veröffentlichungstag der Anmeldung: 12.12.2007
(73) Patentinhaber: SAC Sirius Advanced Cybernetics GmbH, 76149 Karlsruhe (DE)
(72) Erfinder: WAGNER, Christoph, 75203 Königsbach (DE)
(74) Vertreter: Gleiss, Alf-Olav
(86) Internationale Anmeldenummer: PCT/EP2006/002678
(87) Internationale Veröffentlichungsnummer: WO 2006/100077

(56) Entgegenhaltungen:
- EP-A- 1 006 349
- WO-A-2004/051186
- US-A- 4 606 635
- US-A- 5 777 244
- US-A1- 2003 184 740

## Beschreibung

Die Erfindung betrifft eine Vorrichtung zur optischen Formerfassung und/oder optischen Prufung von Gegenständen. Die meisten dies bezüglichen Verfahren und Vorrichtungen lassen sich in zwei Kategorien einteilen:
■ Vorrichtungen der Bildverarbeitung, insbesondere der industriellen Bildverarbeitung. Diese Verfahren zeichnen sich dadurch aus, dass innerhalb kürzester Zeit ein oder mehrere Bilder des Gegenstandes aufgenommen werden und dieses anschließend automatisch durch eine elektronische Recheneinheit beurteilt und geprüft wird. Hierfür sind Zeiten von Bruchteilen einer Sekunde für Bildaufnahme inklusive Beurteilung üblich. Die Vermessung von zweidimensionalen (2D) Merkmalen in der Bildebene wie Längen, Winkel, Flächen etc. sind Stand der Technik. Die Vermessung und Prüfung dreidimensionaler Merkmale bereitet Schwierigkeiten, da die aufgenommenen Bilder die dritte Dimension senkrecht zur Bildebene nur unzureichend wiedergeben.
■ Demgegenüber sind Vorrichtungen der optischen 3D-Messtechnik (dreidimensionale Messtechnik) darauf spezialisiert, neben den Merkmalen in der Bildebene auch Merkmale der dritten Dimension senkrecht zur Bildebene zu vermessen. Nachteilig ist dabei, dass diese Verfahren sehr viel mehr Zeit in Anspruch nehmen als die der Bildverarbeitung. Hier sind Zeiten von einer bis zu mehreren Sekunden und Minuten üblich. Auch eine automatische Bewertung der Messergebnisse ist in vielen Fällen nicht üblich.

Ziel ist es, die Vorteile beider Kategorien zu vereinigen und die Nachteile zu eliminieren. Damit können sowohl zweidimensionale als auch dreidimensionale Merkmale innerhalb kürzester Zeit geprüft, vermessen und automatisch beurteilt werden. Damit wird eine Brücke geschlagen zwischen den Bereichen der Bildverarbeitung und der optischen 3D-Messtechnik.

Hierbei werden insbesondere glänzende Gegenstände und Oberflächen aus Metall, Kunststoff etc. berücksichtigt, die sehr häufig im technischen Bereich zu finden sind. Diese Oberflächen bereiten sowohl in der Bildverarbeitung als auch in der optischen 3D-Messtechnik große Schwierigkeiten aufgrund von gerichteter Lichtreflexion. Genauso sind aber auch diffus streuende Gegenstände berücksichtigt, die im allgemeinen keine Schwierigkeiten bereiten.

Die Prüfung und/oder Vermessung von 2D- und/oder 3D-Merkmalen sowie optional eine automatische Bewertung kann gemäß dem in W02004/051186 beschriebenen Verfahren durchgeführt werden. Bei diesem Verfahren, das als photometrische Deflektometrie bezeichnet wird, werden ein photometrisches Stereoverfahren, ein deflektometrisches Verfahren und ein Streukörper S so kombiniert, dass die Orte auf der Streukörperoberfläche flächig codiert werden.

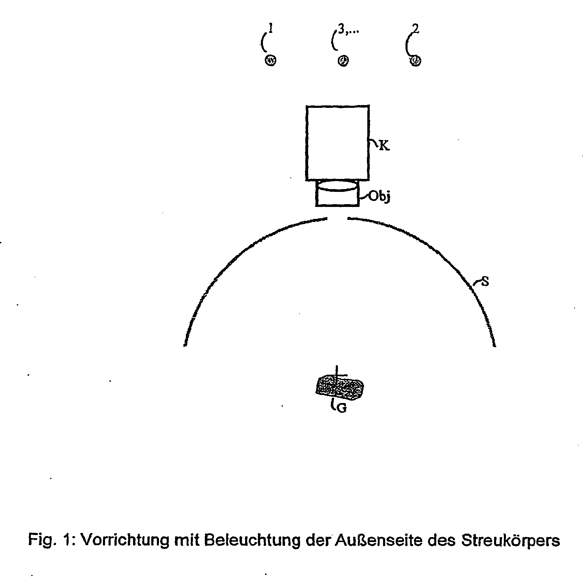

Eine Vorrichtung zur Durchführung dieses bekannten Verfahrens ist beispielsweise wie folgt aufgebaut. Eine Kamera K mit einem Objektiv Obj ist auf den Gegenstand G ausgerichtet. Der Gegenstand wird beleuchtet von einem Streukörper S, der seinerseits von mindestens einer, vorzugsweise mehreren, getrennt schaltbaren Lichtquellen oder Gruppen von Lichtquellen 1, 2, 3,... beleuchtet wird (Figur 1).

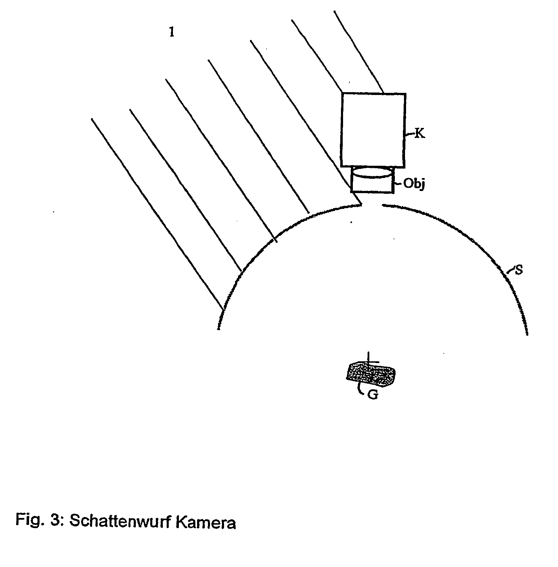

In Figur 1 sind drei Lichtquellen 1, 2 und 3 dargestellt. Diese liegen vorzugsweise in einer Ebene, die senkrecht zur Bildebene von Figur 1 verläuft. Sie liegen aber nicht alle in der Bildebene von Figur 1. Beispielsweise ist die mittlere, die Lichtquelle 3, nach hinten aus der Bildebene von Figur 3 versetzt.

Bei der Realisierung einer solchen Vorrichtung tauchen für den Fachmann eine Reihe von Fragen auf:
1. An welchem Ort sind die Lichtquellen 1, 2, 3... zu platzieren, damit die bestmöglichen Mess- und Prüfergebnisse erreicht werden?
2. Wie ist eine helle Ausleuchtung des Gegenstandes zu erreichen?
3. Ist es vorteilhaft, den Strahl der Lichtquelle durch eine Optik auf den Gegenstand zu bündeln?
4. An welchem Ort ist die Kamera K günstig zu platzieren?
5. Welche Abmessungen der Sichtöffnung im Streukörper S sind vorteilhaft?
6. Aus welchem Material lässt sich der Streukörper vorteilhaft fertigen und wie muss seine Oberfläche beschaffen sein?
7. Wie kann man Verschmutzung und mechanische Beschädigungen des Streukörpers und damit schlechte Ergebnisse vermeiden?

Die besondere Schwierigkeit besteht darin, eine technische Lösung zu finden, die allen Fragestellungen gleichermaßen gerecht wird. Dies ist insbesondere deshalb schwierig, weil zur Lösung der Fragen gegensätzliche Maßnahmen nötig sind.

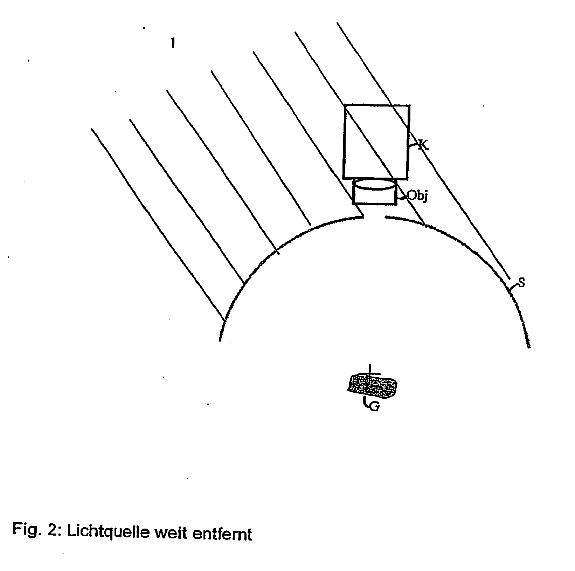

Legt man beispielsweise besonderen Wert auf Fragestellung 1, dann sind die Lichtquellen in ausreichendem Abstand vom Streukörper zu platzieren (Figur 2). Damit ergibt sich von jedem Punkt der Lichtquelle annähernd derselbe Abstand zum Streukörper und eine nahezu parallele Beleuchtung. Für diesen Fall liegen nach dem in WO 2004/051186 beschriebenen Verfahren rechnerisch gut beherrschbare Verhältnisse vor, denn sowohl Richtung als auch Abstand der Lichtquelle können als konstant angesehen werden. Dies ist besonders wichtig, da die flächige Kodierung der Streukörperoberfläche aus dem Zusammenspiel der Streukörperneigung und der Beleuchtungsrichtung entsteht. Senkrechter Einfall der Beleuchtung auf das jeweilige Flächenstück des Streukörpers bewirkt eine Kodierung mit großer Helligkeit, streifender Einfall mit minimaler Helligkeit. Von großer Bedeutung ist auch, aus welcher Richtung die Lichtquellen den Streukörper beleuchten. Liegen diese Richtungen nahe beieinander, so sind die Unterschiede bei der Kodierung gering (geringe Empfindlichkeit der Messvorrichtung gegenüber der zu messenden Neigung), liegen sie weit auseinander sind sie groß (hohe Empfindlichkeit). Die Vorrichtung spricht dann sehr gut bereits auf geringe Variationen der lokalen Gegenstandsneigung an. Allerdings können dann große Bereiche des Streukörpers gar nicht ausgeleuchtet werden.

Für Fragestellung 2 wirkt sich ein großer Abstand der Lichtquellen dagegen negativ aus. Bei einer Verdopplung des Abstandes muss man damit rechnen, dass sich die Beleuchtungsstärke des Streukörpers und damit des Gegenstandes um den Faktor 4 reduziert.

Dies führt zu der Frage 3, ob sich das Licht vorteilhaft bündeln lässt. Die Beleuchtungsstärke lässt sich dann auch bei größeren Abständen aufrechterhalten. Dagegen spricht wiederum, dass die zur Bündelung erforderlichen optischen Einrichtungen und Reflektoren meist keine so gleichmäßige Ausleuchtung ermöglichen, wie es ohne sie möglich ist.

Zu berücksichtigen ist dabei auch die Frage 4. Die Position der Kamera ist so zu wählen, dass diese keinen Schattenwurf auf dem Streukörper erzeugt. Dies ist aber insbesondere dann der Fall, wenn die Kamera nahe am Streukörper positioniert wird (Figur 3). Andererseits ist es wünschenswert, die Kamera möglichst nahe am Streukörper und dem Gegenstand zu platzieren, um eine gute Auflösung des Gegenstandes zu erzielen.

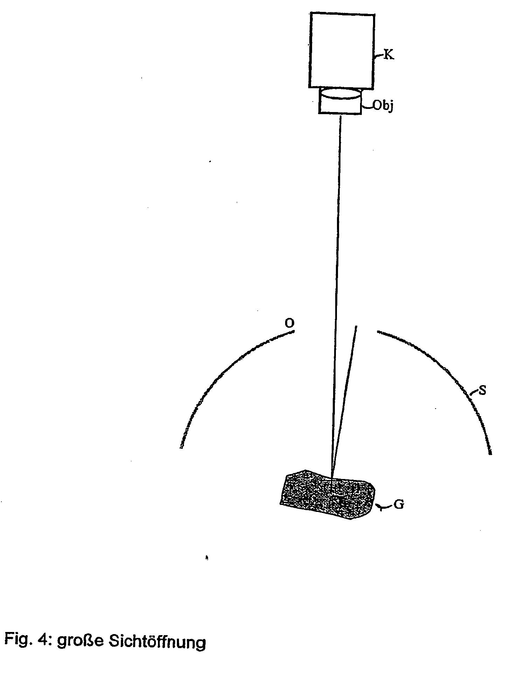

Die Lösung dieser Frage ist gekoppelt mit der Frage 5. Bei geringem Abstand der Kamera kann die Sichtöffnung im Streukörper klein gewählt werden, bei größerem Abstand muss sie größer gewählt werden, damit sämtliche Bereiche des Gegenstandes erfassbar sind. Dadurch aber ist der Streukörper in weiten Bereichen unterbrochen. Diese Bereiche stehen dann nicht zur Beleuchtung des Gegenstands zur Verfügung. Ist die Oberfläche des Gegenstandes so geneigt, dass nur Licht von diesen Fehlstellen des Streukörpers in die Kamera reflektiert werden kann, so ist die Vorrichtung für alle betroffenen Neigungen blind (Figur 4).

In den Fragen 6 und 7 geht es um das Material des Streukörpers, dessen Beschaffenheit der Oberfläche, Verschmutzung und mögliche mechanische Beschädigungen. Denkbar ist z. B. ein aufgerauter, durchsichtiger Kunststoff (Oberflächenstreuer) oder ein milchig durchscheinender Kunststoff (Volumenstreuer). Eine günstige, gleichmäßige Streuung in alle Raumrichtungen wird beim Volumenstreuer erreicht, allerdings bleibt sehr viel Licht dabei ungenutzt. Darüber hinaus entsteht an der glatten Oberfläche ein unerwünschter Lichtreflex. Ein Oberflächenstreuer wiederum lenkt den Weg des Lichts in geringerem Maß ab, so dass mehr Licht genutzt werden kann. Dagegen spricht, dass keine gleichmäßige Abstrahlung in alle Richtungen erreicht wird und eine raue Oberfläche zur Verschmutzung durch Staub und Fingerabdrücke neigt und auch nur sehr schwer zu reinigen ist. Wählt man für den Streukörper statt Kunststoff Glas, so kann man bessere Eigenschaften bezüglich der mechanischen Beständigkeit und bezüglich der Reinigung erreichen. Andererseits ist die präzise Fertigung eines formgenauen Streukörpers bei Glas sehr viel aufwendiger als bei Kunststoff. Hinzu kommt die Bruchgefahr bei Glas.

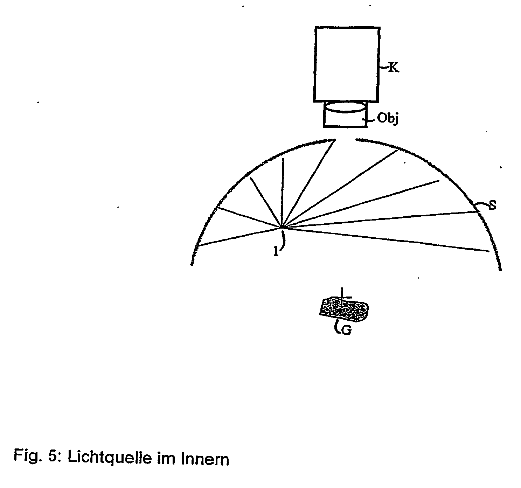

Je näher eine Lichtquelle am Streukörper, im Extremfall also sogar innerhalb des Streukörpers angeordnet ist, umso weniger kann man davon ausgehen, dass der Streukörper von einem parallelen Strahlenbündel beleuchtet wird. Stattdessen ist davon auszugehen, dass die Lichtquellen beispielsweise in die gesamte Hemisphäre abstrahlen (Figur 5). Je nach Lichtquelle und Abstrahlcharakteristik bezüglich der Richtung ergibt sich eine andere Beleuchtungsverteilung auf dem Streukörper. Die gesamte rechnerische Auswertung - wie sie sich aus WO 2004/051186 ergibt - würde hiermit unbrauchbar. Auch der Abstand der Lichtquellen zu jedem Punkt des Streukörper variiert je nach Lage der Lichtquelle in großem Maß. Die Lichtquellen im Mittelpunkt eines kugelförmigen Streukörpers zu platzieren scheidet aus, da der Mittelpunkt und seine Umgebung für den zu untersuchenden Gegenstand reserviert sind.

Erfindungsgemäß wird diese Problematik dadurch gelöst, dass die komplexen Einflussfaktoren, beispielsweise Beleuchtungsrichtung auf den Streukörper, jeweiliger Abstand des Streukörpers und seiner beleuchteten Oberfläche von der Lichtquelle und die räumliche Abstrahlcharakteristik der Lichtquelle sich in geschickter Weise so kompensieren, dass eine Beleuchtungsverteilung nachgeahmt wird, wie sie bei einer Beleuchtung von außen mit paralleler Lichteinstrahlung ergibt (Figur 2). Für eine spezielle Kombination der Parameter konnte eine Lösung gefunden werden. Aufgrund der rechnerisch komplexen Zusammenhänge wurde eine Lösung anhand einer Simulation ermittelt und hier nur das Ergebnis dargestellt.

Daneben ist aus US 2003/0184740 bekannt, mehrere einzeln schaltbare Lichtquellen in der Nähe des Äquators eines halbkugelartigen opaken Streukörpers anzuordnen. Hiermit wird der leicht oberhalb der Lichtquellen angeordnete zu untersuchende Gegenstand ausgeleuchtet und das vom Gegenstand rückgestreute Licht wird von einer Kamera durch eine Sichtöffnung am Nordpol des Streukörpers erfasst.

Eine erfindungsgemäße Vorrichtung ist im unabhängigen Anspruch 1 definiert. Anspruch 1 richtet sich auf eine

Vorrichtung zur optischen Formvermessung und/oder optischen Prüfung von Gegenständen, mit mindestens einer Kamera, mindestens einem Objektiv, einem undurchsichtigen Streukörper und mit mindestens zwei im Inneren des Streukörpers angeordneten Lichtquellen, wobei eine Innenseite des Streukörpers von einer oder mehreren der einzeln oder in Gruppen unabhängig voneinander schaltbaren Lichtquellen beleuchtet ist, und die mindestens zwei Lichtquellen außerhalb des Zentrums des Streukörpers so platziert sind, dass die Innenseite des Streukörpers entlang einer sich ausgehend von einem Punkt des Äquators des Streukörpers in Richtung zum Nordpol desselben und weiter zu einem gegenüberliegenden Punkt des Äquators erstreckenden Linie mit stetig wachsender oder mit stetig fallender Beleuchtungsstärke beleuchtet ist, wenn mindestens eine der Lichtquellen eingeschaltet ist.

Als Beleuchtungseinrichtung wird eine als Lambertstrahler ausgebildete Lichtquelle bevorzugt. Das bedeutet, dass die Strahldichte mit dem Kosinus des Abstrahlwinkels variiert. Diese Verteilung ist häufig bei beleuchteten Körpern, nicht aber bei selbstleuchtenden Körpern und Lichtquellen anzutreffen. Am häufigsten findet man eine konstante Abstrahlung in alle Raumrichtungen (z.B. Glühlampen, Gasentladungslampen) oder eine stark gerichtete Abstrahlung bei Lasern und LEDs. Der Sonderfall der lambertförmigen Abstrahlung kann dennoch mit speziell dafür ausgelegten LEDs erreicht werden.

Die Form des Streukörpers wird bevorzugt in der Form einer Kugel oder einer Halbkugel ausgeführt. Als Material werden bevorzugt Metall, undurchsichtiger Kunststoff oder andere Materialien gewählt, die fertigungstechnisch gut beherrschbar sind. Die kritische Frage liegt darin, den Ort und die Ausrichtung der Lichtquellen richtig zu wählen. Zur Orientierung auf der Oberfläche eines halbkugelförmigen Streukörpers werden die Begriffe Nordpol für den kameraseitig gelegenen Scheitel der Halbkugel und Äquator für die Abschlusskante der Halbkugel gewählt. Die Begriffe Nordpol und Äquator werden auch bei Streukörpern mit anderen Formen verwendet. Die Lichtquellen sind vorzugsweise in einer Ebene nahe der Äquatorebene zu platzieren. Ihr Hauptstrahl ist gegenüber dem Streukörper auszurichten, beispielsweise unter einem Winkel zwischen -90° und +90° gegenüber einer Senkrechten zur Äquatorebene. Vorzugsweise beträgt der Winkel zu der Senkrechten -30° bis +30°. Besonders günstige Lichtverhältnisse liegen bei einem Winkel von 0° oder nahe 0°. Der Hauptstrahl der Lichtquelle fällt dann entweder exakt mit der Senkrechten zur Äquatorebene zusammen oder schließt mit dieser einen sehr kleinen Winkel ein.

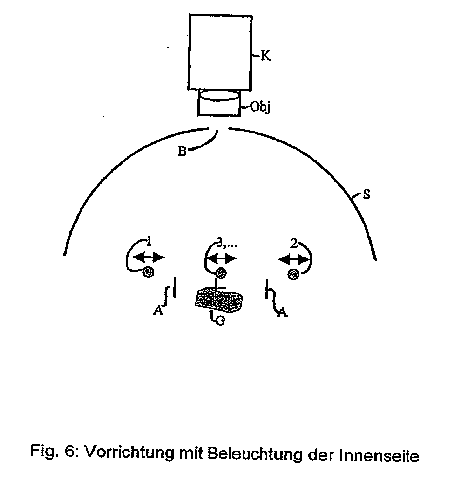

Es werden mehrere, vorzugsweise aber vier Lichtquellen verwendet, die vorzugsweise in Form eines Kreuzes, beispielsweise eines "+" oder "X", angeordnet sind. Der Mittelpunkt des Kreuzes liegt vorzugsweise auf einer Linie, die senkrecht auf der Äquatorebene steht und durch deren Mittelpunkt verläuft. Die Lichtquellen sind in einem bestimmten Abstand zum Mittelpunkt des Streukörpers anzuordnen, beispielsweise bei 20% bis 80%, vorzugsweise bei 30% bis 70% des Abstands zwischen Mittelpunkt des Streukörpers und dessen Innenfläche. Dieser entspricht beim einem kugelförmigen Streukörper dem Kugelradius. Besonders günstige Verhältnisse liegen in der Nähe von 50% des Kugelradius vor (Figur 6).

Zu der Darstellung der Lichtquellen 1, 2, 3, etc. ist auch hier Folgendes festzuhalten: Vorzugsweise sind vier Lichtquellen vorgesehen, die in einer Ebene angeordnet sind. Denkbar ist es, die Lichtquellen in der Äquatorebene des Streukörpers S anzuordnen oder etwas darüber oder darunter. In Figur 6 sind die Lichtquellen nur scheinbar in einer Reihe angeordnet. Tatsächlich liegen beispielsweise die Lichtquellen 1 und 2 auf einer Durchmesserlinie der Äquatorebene. Die Lichtquelle 3 ist gegenüber der Bildebene von Figur 6 nach hinten versetzt und ihrerseits vorzugsweise auf einer Durchmesserlinie angeordnet, gemeinsam mit einer hier nicht dargestellten Lichtquelle 4.

Betrachtet man die Lichtquellen senkrecht von oben, beispielsweise aus der Sicht der Kamera K, so sieht man, dass sie in einem Abstand zu dem durch ein Kreuz gekennzeichneten Mittelpunkt des Streukörpers in einer Ebene angeordnet sind und beispielsweise auf den Ecken eines vorzugsweise gleichseitigen Dreiecks oder an den Enden eines Kreuzes, das vorzugsweise die Form eines "+" oder eines "X" aufweist.

In Figur 6 sind im Strahlengang zwischen den Lichtquellen 1 und 2 einerseits und dem Gegenstand G andererseits Abschattungen A vorgesehen, die eine direkte Beleuchtung des Gegenstands verhindern. In Figur 6 ist die der Lichtquelle 3 zugeordnete Abschattung aus Gründen der Vereinfachung nicht dargestellt.

Die Anordnung der hier dargestellten und auch bei anderen Ausführungsvarianten vorgesehenen Abschattung A ist beliebig. Entscheidend ist der Gesichtspunkt, eine direkte Beleuchtung des Gegenstands durch die Lichtquellen zu vermeiden. Es ist also möglich, die Abschattung an der Halterung einer Lichtquelle oder aber an der Halterung des Gegenstands anzubringen. Schließlich kann auch eine getrennte Halterung für die Abschattungen vorgesehen werden.

Mit dieser Wahl der Parameter wird erreicht, dass alle Punkte des Streukörpers flächig kodiert werden. Die Art der Kodierung und der Beleuchtungsverteilung entspricht weitgehend einer Beleuchtung von außen aus großer Entfernung, obwohl die Lichtquellen in Wirklichkeit aus geringster Entfernung im Innern den Streukörper beleuchten. Damit ist Berechnung der Neigung entsprechend des bereits aus WO 2004/051186 bekannten Verfahrens möglich.

Alternativ können die Lichtquellen aber auch in der Nähe des Äquators platziert sein und die gegenüberliegende Seite des Streukörpers auf dem Äquator anstrahlen. In diesem Fall können die quellenfernen Punkte des Streukörpers heller ausgeleuchtet sein als die quellennahen.

Für Gegenstände mit vorwiegend streuender Oberfläche und/oder einer Kombination aus glänzender und streuender Oberfläche kann zusätzlich auch eine direkte Beleuchtung des Gegenstandes sinnvoll sein. Hierzu können Lichtquellen beispielsweise auf der Innenseite des Streukörpers befestigt werden oder durch Öffnungen in den Innenraum ragen, vorzugsweise mit der Lichtrichtung zum Gegenstand.

Vorteilhaft kann es in allen der genannten Fällen sein, die Lichtquellen verschiebbar zu befestigen, um die Position je nach Anwendung variieren zu können (Figur 6).

In Bezug auf Frage 2 wird eine sehr gute Ausleuchtung erreicht, da das Licht überall die Innenseite des Streukörpers erreichen kann. Eine Optik zum Bündeln des Lichts ist nicht nötig (Frage 3).

Die Kamera kann vorteilhaft direkt außerhalb des Streukörpers platziert werden, es tritt kein Schattenwurf auf (Frage 4).

Die Sichtöffnung kann daher minimal gehalten werden (Frage 5).

Als Materialien stehen sämtliche nicht durchscheinenden Materialien zur Verfügung, beispielsweise Metall, Kunststoff etc. (Frage 6).

Eine Reinigung ist im allgemeinen nicht nötig, da der Innenbereich des Streukörpers vor Schmutz und Berührung geschützt ist. Ein Beschädigung ist ebenfalls weitgehend auszuschließen (Frage 7).

Darüber hinaus bietet diese Anordnung der Lichtquellen weitere Vorteile. Man kann sicherstellen, dass der Benutzer der Vorrichtung nicht von einer Lichtquelle geblendet wird. Dies ist vor allem bei Hochleistungslichtquellen wie z. B. leistungsstarken LEDs von Bedeutung, für die unter Umständen bereits Laserschutzbestimmungen gelten. Zusätzlich wird eine Verfälschung der Messung durch Umgebungslicht vermieden.

Weiterhin ist die Vorrichtung bevorzugt wie folgt aufgebaut.

### Kamera:

Als Kamera wird vorzugsweise eine elektronisch arbeitende Kamera, insbesondere eine CCD- oder CMOS-Kamera verwendet. Deren Bilder können zur Weiterverarbeitung an eine elektronisch arbeitende Recheneinheit übermittelt werden oder innerhalb einer so genannten intelligenten Kamera selbst verarbeitet werden. Es können sowohl Matrixkameras als auch Zeilenkameras zum Einsatz kommen.

### Objektiv:

Das Objektiv ist vorzugsweise als Makroobjektiv ausgeführt, da sich der Gegenstand vorzugsweise in geringem Arbeitsabstand vom Objektiv befindet. Ebenso können mehrere Kameras mit mehreren Objektiven verwendet werden. Denkbar sind auch Mikroobjektive, wenn sehr hohe Vergrößerungen gefordert sind.

### Streukörper:

Dieser Streukörper ist vorzugsweise in Form einer Halbkugel, einer Kugel, eines Zylinders, eines Ellipsoids oder Quaders eines ausgebildet (Figur 6). Bei Verwendung einer Matrixkamera oder einer Zeilenkamera wird bevorzugt eine Halbkugel verwendet.

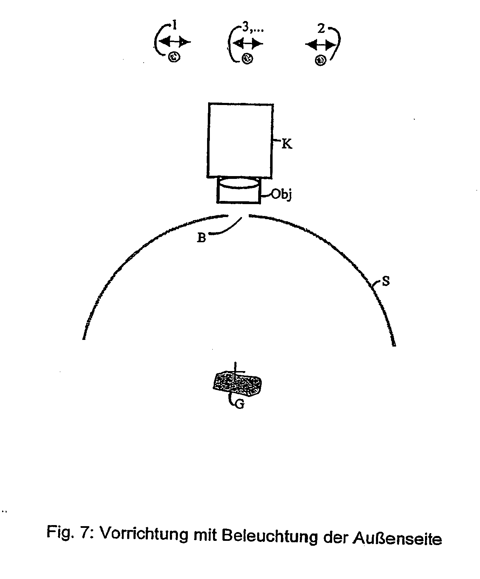

Der Streukörper bekannter Vorrichtungen kann bei Beleuchtung von außen aus durchsichtigem Material wie Mattglas, mattem durchscheinendem Kunststoff etc. bestehen (Figur 7). Erfindungsgemäß wird allerdings ein undurchsichtiges Material wie Metall, undurchsichtiger Kunststoff etc. verwendet (Figur 6). Der Streukörper kann unbeschichtet, beispielsweise mit rauer und damit diffus streuender Oberfläche ausgeführt sein. Vorzugsweise wird er allerdings mit einer diffus reflektierender Farbe beschichtet, die einfallendes Licht ungerichtet streut. Der bevorzugte Farbton ist Weiß, andere Farben sind aber ebenso möglich. Besonders vorteilhaft ist es, wenn die Farbe fluoreszierende oder phosphoreszierende Eigenschaften aufweist. Auch das Material des Streukörpers selbst kann diese Eigenschaft zeigen, in diesem Fall ist eine Beschichtung nicht zwingend nötig. Hierdurch kann Licht von bevorzugt kurzer Wellenlänge wie z. B. blaues oder ultraviolettes Licht in längerwelliges Licht, insbesondere aber auch weißes Licht gewandelt werden. Besonders vorteilhaft ist es auch, die Kamera bzw. das Objektiv mit einem Sperrfilter für bestimmte Wellenlängen auszurüsten, vorzugsweise für kleine Wellenlängen. Damit wird direkter Lichteinfall der Lichtquelle in die Kamera verhindert, das durch Fluoreszenz und/oder Phosphoreszenz gestreute Licht aber durchgelassen.

Die Innenseite des Streukörpers wird von einer oder mehreren Lichtquellen beleuchtet. Vorzugsweise ist der Gegenstand G im oder nahe dem Zentrum des Streukörpers angeordnet. Die bevorzugte Form des Streukörpers ist eine Halbkugel. Zur einfacheren Bezeichnung werden auch hier die Begriffe Nordpol für den Scheitel der Halbkugel und der Begriff Äquator für den Rand der Halbkugel verwendet. Um den Gegenstand G einfach in einer Bewegung entlang der Äquatorebene ins Zentrum des Streukörpers führen zu können, ist es vorteilhaft, den Streukörper vom Nordpol nur bis zu einem Bereich leicht nördlich des Äquators reichen zu lassen, zumindest dort, wo der Gegenstand eingebracht werden soll.

Für die Kamera und das Objektiv, die sich vorzugsweise außerhalb des Streukörpers befinden, kann der Streukörper eine auch als Sichtöffnung bezeichnete Öffnung B aufweisen, welche die Sicht auf den Gegenstand ermöglicht (Figur 6). Die Öffnung B wirkt auch als Blende für das Objektiv. Die Öffnung B soll so groß ausgeführt sein, dass sie den ungestörten Blick auf den zu prüfenden Gegenstand oder auch Teilen hiervon ermöglicht. Eine große Öffnung bewirkt, dass viel Licht zur Kamera gelangt. Dies ist insbesondere für kurze Belichtungszeiten wünschenswert. Darüber hinaus steigt die beugungsbegrenzte Auflösung bei einer weiten Öffnung. Andererseits soll die Öffnung B so klein wie möglich sein, damit ein möglichst großer Teil der Streukörperoberfläche nutzbar bleibt. Gleichzeitig kann der Schärfentiefebereich bei einer kleinen Öffnung B ausgedehnt werden, so dass auch Gegenstände G mit großen Höhenunterschieden überall scharf abgebildet werden können. Diese Anforderungen lassen sich vereinbaren, wenn die Lage der Öffnung B und die Lage der Eintrittspupille EP des Objektivs identisch sind. Wahlweise kann es auch technischen Gründen auch vorteilhaft sein, die Ebene der Öffnung B nur in die Nähe der Eintrittspupille EP zu legen. Dies ist insbesondere dann der Fall, wenn der Ort der Eintrittspupille physisch nicht zugänglich ist, weil sie innerhalb des Objektivs liegt. Der Durchmesser der Sichtöffnung ist vorzugsweise gleich oder kleiner als der Durchmesser der Eintrittspupille des Objektivs zu wählen, damit möglichst wenig der Streukörperoberfläche ungenutzt bleibt. Ist der Durchmesser der Sichtöffnung kleiner als die der Eintrittspupille des Objektivs, so stellt die Sichtöffnung die Aperturblende des optischen Gesamtsystems bestehend aus Objektiv und Sichtöffnung dar. Insbesondere bei einer weiten Öffnung der Kamerablende und einer kleinen Sichtöffnung kann somit die Lage der Eintrittspupille EP des Gesamtsystems an den Ort der Sichtöffnung gezwungen werden.

Ein weiterer günstiger Effekt trägt dazu bei, dass die nutzbare Fläche des Streukörpers möglichst groß sein kann. Es wird zunächst angenommen, der Gegenstand ist sehr stark glänzend und kann als ebener Spiegel betrachtet werden, der in der Äquatorebene liegt. Das Objektiv ist auf den Spiegel, d. h. die Äquatorebene fokussiert. Im Spiegel ist die Sichtöffnung unscharf zu erkennen. Es stellt sich die Frage, wie groß das Unschärfescheibchen ist. Aufgrund von Symmetrieüberlegungen kommt man zu dem Schluss, dass der Durchmesser des Unschärfescheibchens genau dem Durchmesser der Eintrittspupille des optischen Gesamtsystems entspricht, also der Sichtöffnung. Der Rand der Sichtöffnung verschwimmt damit bis ins Zentrum der Sichtöffnung, quasi so als ob der Streukörper keine Öffnung hätte. Dieser Effekt wird noch verstärkt, wenn man auf eine Ebene etwas nördlich des Äquators fokussiert, das Unschärfescheibchen wird damit größer als die Sichtöffnung und gewährleistet einen sicheren Überlapp. Bisher wurde von einem Spiegel als Objekt ausgegangen, der ein klares Bild liefert. Für rauere glänzende Oberflächen verschwimmt das Bild der Sichtöffnung weiter, für diffus streuende Oberflächen völlig. Vorteilhaft ist es, wenn die Sichtöffnung des Streukörpers als wechselbarer Einsatz ausgeführt ist. So kann je nach Anforderung eine größere oder kleinere Sichtöffnung verwendet werden.

Alternativ zur kreisrunden Sichtöffnung sind Varianten denkbar, die nur einen Teil der Kreisfläche freilassen. Beispiele sind ein oder mehrere Kreissektoren. Unterteilungen sind auch in radialer Richtung denkbar, vorzugsweise kombiniert mit Kreissektoren. Es sind aber andere Formen möglich wie z. B. ein Loch exzentrisch bezüglich der optischen Achse des Objektivs bis hin zu beliebigen Formen. Diese Sichtöffnung wird vorzugsweise drehbar um die optische Achse des Objektivs ausgeführt, beispielsweise als drehbare Kalotte, die bündig in den Streukörper eingesetzt wird. Während der Belichtung eines Kamerabildes kann dann die sich drehende Sichtöffnung die Eintrittspupille des Objektivs überstreichen. Besonders vorteilhaft ist es, wenn die Sichtöffnung die Eintrittspupille während einer Belichtung genau einmal, zweimal oder mit einem anderen ganzzahligen Vielfachen überstreicht, damit eine gleichmäßige Belichtung innerhalb der Eintrittspupille erreicht wird.

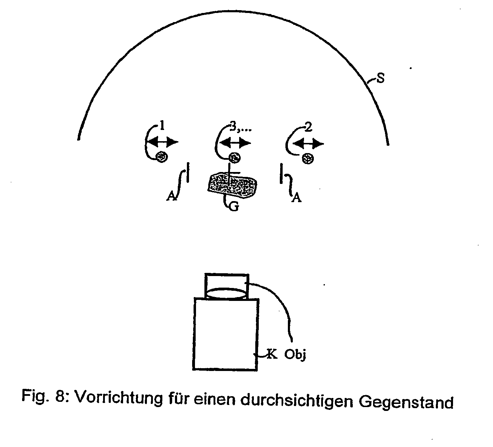

Ist ein transparenter Gegenstand zu prüfen, z. B. aus klarem Glas, Kunststoff etc. so wird die Kamera mit dem Objektiv vorzugsweise vom Südpol nach Norden blickend angeordnet. Die Kamera betrachtet den Streukörper durch den zu prüfenden Körper hindurch (Figur 8). In diesem Fall ist eine Sichtöffnung nicht zwingend nötig.

### Lichtquellen:

Als Lichtquellen sind beispielsweise Glühlampen, Gasentladungslampen, Lichtquellen mit Lichtleitfaser, Blitzlampen, Laserlichtquellen sowie Halbleiterstrahlungsquellen denkbar. Insbesondere sind Lumineszenzdioden (LEDs) von Interesse, da sie eine geringe Baugröße aufweisen, schnell schaltbar sind und eine lange Lebensdauer besitzen. Insbesondere sind Hochleistungs-LEDs mit hoher Strahlungsleistung vorteilhaft. Die Lichtquellen können unabhängig voneinander eingeschaltet werden und lassen verschiedene Beleuchtungssituationen entstehen. Die Lichtquellen oder auch Gruppen von Lichtquellen sind unabhängig voneinander schaltbar. Je nachdem, welche Lichtquelle oder Gruppe von Lichtquellen eingeschaltet ist, entsteht eine andere Beleuchtungssituation. Ziel ist es, die Lichtquellen 1, 2, 3 ... so zu platzieren, dass alle Orte auf der Streukörperoberfläche flächig codiert werden können. Um diese Fläche beispielsweise ausgehend von einem Punkt des Äquators entlang einer Linie in Richtung zum Nordpol und weiter zum gegenüberliegenden Punkt des Äquators zu kodieren, wird eine stetig wachsende oder eine stetig fallende Ausleuchtung entlang dieser Linie realisiert. Dies wird dadurch erreicht, dass die Lichtquelle außerhalb des Zentrums des Streukörpers platziert wird, vorzugsweise in der Äquatorebene, zumindest nahe der Äquatorebene, mit der Lichtrichtung senkrecht dazu. Andere mögliche Ausrichtungen des Hauptstrahls einer Lichtquelle wurden oben bereits näher erläutert. Je näher die Lichtquelle sich am Zentrum befindet, umso gleichmäßiger ist die Verteilung, je weiter am Rand, umso ungleichmäßiger. Für die Codierung sind möglichst große Unterschiede der Ausleuchtung zwischen einem Endpunkt der Linie und dem anderen erwünscht, wobei aber der Übergang möglichst gleichmäßig sein soll. Gleichzeitig soll die Lichtquelle eine möglichst großen Bereich im Zentrum des Streukörpers für den zu prüfenden Gegenstand freilassen. Ein guter Kompromiss hinsichtlich all dieser Kriterien wird erzielt, wenn die Lichtquelle bei etwa 20% bis 80%, vorzugsweise bei etwa 30% bis 70% des Abstands zwischen Mittelpunkt des Streukörpers und dessen Innenfläche, hier des Kugelradius platziert wird. Insbesondere Positionen im Bereich von 50% sind günstig (Figur 6).

Alternativ kann eine Lichtquelle aber auch in der Nähe des Äquators platziert sein und die gegenüberliegende Seite des Streukörpers anstrahlen. In diesem Fall sind die quellenfernen Punkte des Streukörpers heller ausgeleuchtet sein als die quellennahen.

Vorteilhaft kann es in allen der genannten Fällen sein, die Lichtquellen verschiebbar und/oder drehbar zu befestigen, um die Position je nach Anwendung variieren zu können (Figur 6). Bei einer Verschiebung und/oder Drehung der Lichtquellen wird vorzugsweise darauf geachtet, dass deren symmetrische Anordnung erhalten bleibt.

Für Gegenstände mit vorwiegend streuender Oberfläche und/oder einer Kombination aus glänzender und streuender Oberfläche kann zusätzlich eine direkte Beleuchtung des Gegenstandes sinnvoll sein. Hierzu können Lichtquellen beispielsweise auf der Innenseite des Streukörpers befestigt werden oder durch Öffnungen in den Innenraum leuchten oder in diesen ragen, vorzugsweise mit der Lichtrichtung zum Gegenstand.

Neben dem Ort der Lichtquelle und der daraus resultierenden Entfernung zu jedem Ort der Streukörperoberfläche geht maßgeblich die jeweilige Neigung der Streukörperoberfläche zur Beleuchtungsrichtung und die Abstrahlcharakteristik der Lichtquelle in Abhängigkeit der verschiedenen Raumrichtungen ein. Vorteilhaft sind beispielsweise die kugelförmige Form des Streukörpers, bei der die Neigung jedes Oberflächenpunktes unterschiedlich ist und eine eindeutige Codierung ermöglicht. Gleichzeitig findet ein stetiger Übergang der Neigung von einem Punkt zu einem Nachbarpunkt statt, so dass die Beleuchtungsstärke gleichmäßig zu- oder abnehmen kann. Eine vorteilhafte Abstrahlcharakteristik der Lichtquelle ist die lambert'sche oder eine andere breite Abstrahlcharakteristik, da hier vom der Äquatorebene aus beispielsweise die gesamte Nordhalbkugel ausgeleuchtet werden kann. Alternativ dazu könnten auch seitlich abstrahlende Lichtquellen verwendet werden, die beispielsweise in der Nähe des Streukörperoberfläche platziert werden.

Eine zweite Lichtquelle kann bezüglich des Mittelpunkts des Streukörpers symmetrisch angeordnet werden. Bei zwei Lichtquellen kann die Streukörperoberfläche entlang einer Richtung codiert werden, entlang einer gedachten Richtung von einem Äquatorpunkt zum gegenüberliegenden Äquatorpunkt. Es kann also nur eine Neigungsrichtung erfasst werden.

Werden drei Lichtquellen verwendet, können diese vorzugsweise an den Ecken eines gleichseitigen Dreiecks angeordnet werden, es sind aber auch andere Anordnungen möglich. Mit drei Lichtquellen können bereits zwei Richtungen auf der Streukörperoberfläche codiert werden. Drei Lichtquellen stellen somit die minimale Anzahl von Quellen dar, mit denen die Streukörperoberfläche flächig codiert werden kann.

Für die hier angesprochenen Lichtquellen gilt das oben Gesagte entsprechend: Sie sind in einer Ebene angeordnet, die beispielsweise der Äquatorebene eines Streukörpers entspricht oder in einem Abstand zu dieser parallel angeordnet ist. Das Dreieck weist einen Mittelpunkt auf, der auf einer Linie liegt, die den Mittelpunkt des Streukörpers schneidet und die senkrecht auf der Äquatorebene des Streukörpers steht.

Besonders vorteilhaft ist es allerdings, vier Lichtquellen zu verwenden, die - in Draufsicht gesehen - in Form eines "X" oder eines "+" angeordnet werden. Bei dieser Anordnung liegen sich jeweils zwei Quellen gegenüber. Man kann beispielsweise ein solches Paar aktivieren, wenn nur die eine Codierungsrichtung von Interesse ist, wenn beide Richtungen gefragt sind, wird auch das andere Paar aktiviert. Auch für die Zuführung der zu prüfenden Gegenstände ist diese Anordnung von Vorteil, da sie mehr Zwischenraum bietet als beispielsweise die symmetrische Anordnung von drei Quellen. Eine größere Anzahl von Lichtquellen ist ebenfalls möglich, aber nicht zwingend nötig.

Bei Verwendung von vier Lichtquellen gilt grundsätzlich das oben Gesagte entsprechend: Die Lichtquellen sind in einer Ebene angeordnet, die der Äquatorebene entspricht oder parallel zu dieser liegt. Die Lichtquellen liegen jeweils einander paarweise gegenüber und sind vorzugsweise symmetrisch angeordnet. Bei der Anordnung in Form eines Kreuzes, sei es in Form eines "X" oder eines "+", so liegt der Mittelpunkt des Kreuzes auf einer Linie, die den Mittelpunkt der Äquatorebene schneidet und senkrecht auf dieser steht.

Als eine mögliche Lage der Lichtquellen wurde bisher die Äquatorebene genannt. Für eine einfache Zuführung der Prüfteile kann es aber sinnvoll sein, die Quellen in einer anderen Ebene zu platzieren, beispielsweise weiter nördlich, um die Äquatorebene als Messebene völlig frei zu lassen.

Um einen direkten Lichteinfall der Lichtquellen auf den zu prüfenden Gegenstand zu verhindern, können Abschattungen A nötig sein, die beispielsweise mit den Halterungen der Lichtquellen oder einem Halter des Prüfgegenstandes verbunden sind. Es können auch separate Halterungen für die Abschattungen A vorgesehen werden. Die Abschattungen A sind so groß zu wählen, dass keine direktes Licht einfällt, aber gleichzeitig möglichst klein, damit vom Gegenstand aus gesehen nicht ein Teil des Streukörpers verdeckt wird.

Der Streukörper S kann im Bereich der Öffnung B außen einen zylindrischen Ansatz aufweisen, der als Halterung für verschiedene Blenden zur Realisierung verschiedener Größen und Formen der Sichtöffnung (Öffnung B) und für die Kamera dienen kann.

### Stereosystem:

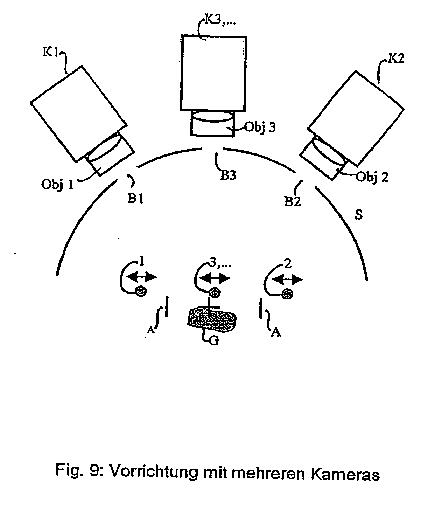

Neben der Zahl der Lichtquellen kann auch die Zahl der Kameras bzw. Objektive variiert werden (Figur 9). Benutzt man beispielsweise zwei Kameras, so kann mit der Vorrichtung auch ein binokulares Stereoverfahren ausgeführt werden. Vorzugsweise werden für die beiden Kameras bzw. Objektive zwei Sichtöffnungen vorgesehen, die den Blick aus zwei verschiedenen Positionen in Richtung des zu prüfenden Gegenstandes ermöglichen. Die Disparität korrespondierender Punkte in den beiden Kameraansichten liefert eine Aussage über die Lage von Gegenstandspunkten bezüglich der dritten Dimension, also senkrecht zur Äquatorebene. Beim binokularen Stereoverfahren handelt es sich damit um ein höhenmessendes Verfahren im Unterschied zum neigungsmessenden Verfahren der photometrischen Deflektometrie. Beide Verfahren lassen sich vorteilhaft kombinieren, beispielsweise wie in US 6,590,669 beschrieben. Hierbei bietet das höhenmessende Verfahren Vorteile bei der Erfassung der globalen dreidimensionalen Gestalt des Gegenstandes, das neigungsmessende bei der Erfassung der lokalen dreidimensionalen Gestalt. Die Zahl der Kameras kann weiter erhöht werden, beispielsweise auf drei oder vier Kameras.

Insbesondere eine Vorrichtung mit einer größeren oder gleichen Zahl an Kameras wie Lichtquellen bietet den Vorteil, dass für jede Lichtquelle eine einzelne Kamera zur Verfügung steht, was die Aufnahmezeit der Bilder enorm reduzieren kann (Figur 9). Bei typischen elektronischen Kameras (z.B. CCD- und CMOS-Kameras) besteht ein großer Unterschied zwischen der minimalen Belichtungszeit und der minimalen Zeit für einen gesamten Bildzyklus inklusive Auslesen des Bildsensors. Die Belichtungszeit lässt sich problemlos auf Werte unter 100 Mikrosekunden einstellen, während für den gesamten Bildzyklus Zeiten ab 10 Millisekunden üblich sind. Dies liegt daran, dass sehr viel mehr Zeit für das Auslesen des Bildsensors und die Übertragung der Daten benötigt wird als für die eigentliche Belichtung. Wird eine einzelne Kamera verwendet, so ist die Zeit für den Bildzyklus maßgeblich, da dieselbe Kamera mehre Bilder in Folge aufnehmen muss. Ist die Zahl der Kameras gleich der Zahl der Lichtquellen, so ist die reine Belichtungszeit maßgeblich. Die Bildaufnahme würde im Takt der Beleuchtungen mit sehr kurzer Verzögerung gestartet, man kann also von einer Triggerkaskade sprechen.

Kombination mit anderen höhenmessenden Verfahren.

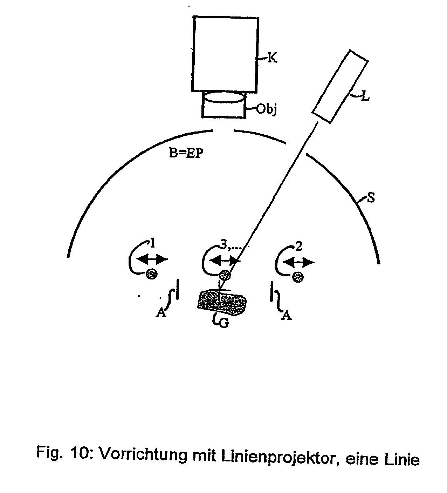

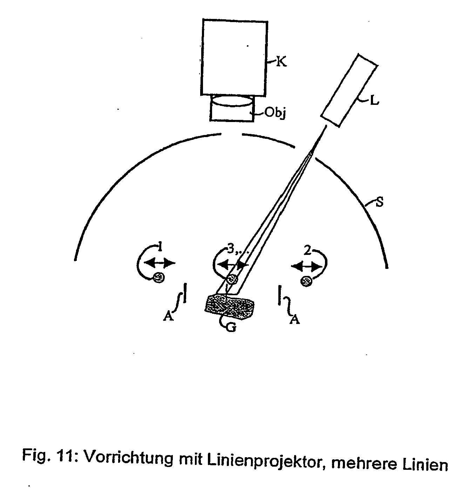

Alternativ kann die Vorrichtung auch dazu benutzt werden, die photometrische Deflektometrie mit einem anderen höhenmessenden Verfahren als dem binokularen Stereoverfahren zu kombinieren, beispielsweise dem Verfahren der Streifenprojektion, der Interferometrie, der Weißlichtinterferometrie, einem Laufzeitverfahren oder vorzugsweise dem Laserlichtschnittverfahren (Figur 10). Hierzu wird vorzugsweise eine Sichtöffnung im Streukörper für den beleuchtenden Laser vorgesehen. Besonders vorteilhaft sind Halbleiterlaser L, insbesondere solche, die bereits eine Optik zur Erzeugung einer o-der mehrerer Laserlinien integriert haben. Solche Lichtquellen sind sehr kompakt und sind mit äußerst geringem zeitlichen Verzug elektronisch schaltbar. Üblicherweise arbeiten Laserlichtschnittverfahren mit einer Mechanik, die den Prüfling und eine einzelne Laserlinie relativ zueinander bewegen und so den Prüfling Profilschnitt für Profilschnitt nacheinander abtasten. Für jeden Profilschnitt ist eine einzelne Kameraaufnahme nötig, was dementsprechend Zeit kostet. Nachteilig ist zudem, dass eine präzise und auf die Kameraaufnahme synchronisierte Verschiebeeinheit benötigt wird. Es ist daher vorteilhaft, wenn mehrere Laserlinien gleichzeitig projiziert werden (Figur 11). Damit lassen sich mehre Profilschnitte des zu prüfenden Gegenstands gleichzeitig erfassen, beispielsweise 10 oder 20 Stück. In der erfindungsgemäßen Kombination mit der photometrischen Deflektometrie kann dann bereits eine einziges Kamerabild ausreichend sein, so dass die Verschiebeeinheit und der zeitliche Mehraufwand entfallen können. Dies ist deshalb möglich, weil das höhenmessende Verfahren nur globale Formdaten liefern muss, die lokalen Formdaten aber von der photometrischen Deflektometrie bereitgestellt werden.

### Kalibrierung:

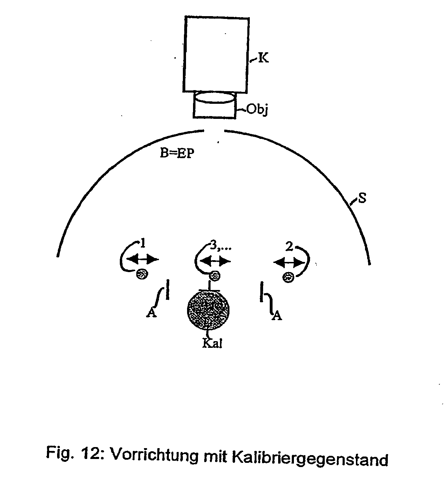

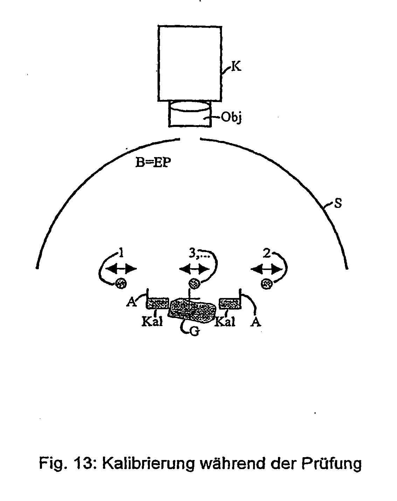

Die erfindungsgemäße Vorrichtung kann um einen Kalibriergegenstand Kal ergänzt werden (Figur 12). Er dient dazu, die gemessenen Neigungswerte anhand eines bekannten Referenzgegenstandes mit den wahren Neigungswerten abzugleichen. Hierdurch ist es möglich, u. a. Toleranzen der räumlichen Beleuchtungsverteilung der Lichtquellen, deren Strahlungsleistung, deren Position und Ausrichtung, der Form und Lage des Streukörpers, der Abstrahlcharakteristik seiner Oberfläche oder Beschichtung sowie der Position und Ausrichtung der Kamera zu kompensieren. Als Referenzgegenstände können Gegenstände bekannter Form verwendet werden, insbesondere solche, deren Oberfläche reflektierend ist und die eine große Zahl verschiedener Neigungen aufweisen. Hierbei wird eine präzise gefertigte, glänzende Metallkugel bevorzugt, da hier sämtliche möglichen Neigungen vorkommen. Werden matte oder teilweise matte Gegenstände untersucht, kann es von Vorteil sein, einen matten Kalibriergegenstand vorzusehen, beispielsweise eine matte oder teilweise matte Kugel. Für diesen Kalibriergegenstand werden die Neigungswerte flächig gemessen und anschließend mit den bekannten Werten abgeglichen. Die Zuordnung von gemessenen Werten zu den wirklichen Werten stellt die Kalibrierung dar. Darüber hinaus ist es möglich, die Kalibrierung auch während der Prüfung von Gegenständen zu überwachen, insbesondere auch eine mögliche Variation der Strahlungsleistung der Lichtquellen. Hierzu kann ein Referenzgegenstand zusätzlich zum Prüfgegenstand in das Sichtfeld der Kamera eingebracht werden (Figur 13), beispielsweise eine ebene spiegelnde Fläche oder eine spiegelnde Kugel, eine ganz oder teilweise matte Fläche oder Kugel. Andere Formen und Oberflächenbeschaffenheiten sind möglich.

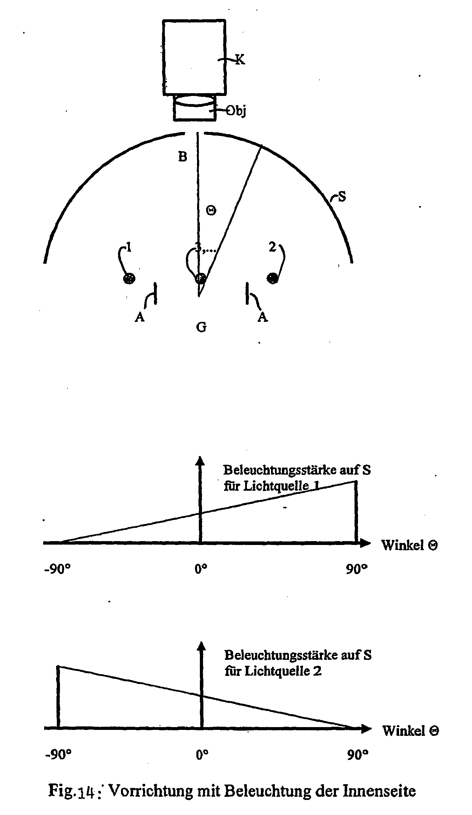

Figur 14 zeigt beispielhaft eine Beleuchtungsverteilung auf dem Streukörper S entlang einer gedachten Ebene durch die Lichtquellen 1 und 2. Horizontal ist der Winkel Θ gemessen vom Nordpol eingezeichnet. Die senkrechte Achse steht für die Beleuchtungsstärke auf der Innenseite des Streukörpers S für die jeweilige Lichtquelle 1 oder 2.

Die zweite Darstellung von unten zeigt die Beleuchtungsstärke für die Lichtquelle 1. Wird diese aktiviert, so steigt die Beleuchtungsstärke für einen Winkel Θ von -90° bis 90° stetig an.

In der untersten Darstellung ist die Beleuchtungsstärke auf der Innenfläche des Streukörpers S für die Lichtquelle 2 dargestellt. Es wird deutlich, dass hier die Beleuchtungsstärke für einen Winkel Θ von -90° bis 90° stetig abfällt. Dadurch werden Punkte auf dem Streukörper S mit verschiedenem Winkel Θ codiert und unterscheidbar.

Wie oben erläutert, werden die Lichtquellen in einer zeitlichen Abfolge ein- und ausgeschaltet, sodass sich nacheinander mehrere, unterschiedliche Beleuchtungssituationen ergeben. Dies ermöglicht die hier angesprochene Codierung und Unterscheidung der Punkte auf dem Streukörper S.

Aus den Erläuterungen zu den vorangegangenen Figuren wird deutlich, dass die Form von verschiedenen Gegenständen und Oberflächen erfasst werden kann. Bei den hier dargestellten Ausführungsbeispielen ist die Kamera K über dem Gegenstand G angeordnet, sofern es sich, wie oben erläutert, um die Betrachtung durchsichtiger Gegenstände geht.

Es ist aber auch möglich, die hier beschriebene Vorrichtung zur optischen Formerfassung von Gegenständen und Oberflächen dazu zu verwenden, Außen- beziehungsweise Umfangsflächen von Gegenständen zu betrachten oder aber auch die Innenfläche von Ausnehmungen in Gegenständen.

Bei der Erfassung und Prüfung von Mantelflächen an zylindrischen oder näherungsweise zylindrischen Gegenständen wird ein besonders geformter Spiegel Ko benutzt, der die Form eines Konusses aufweist. Die Kamera sowie die erfindungsgemäße Prüfeinrichtung sind auf die Stirnfläche des zu betrachtenden Gegenstandes ausgerichtet. Mittels eines Spiegels mit einer - ausgehend von der Kamera gesehen - sich in Richtung des Gegenstands verjüngenden konischen Innenfläche kann die Außenfläche des Gegenstandes, hier also die Mantelfläche eines zylindrischen oder näherungsweise zylindrischen Gegenstands G betrachtet werden. Für die Kamera erscheint diese Fläche als Kreisring, der die Stirnfläche des Bauteils umgibt. Es ist also möglich, die Stirnfläche und die Mantelfläche eines Gegenstands in derselben Ansicht zu prüfen.

Mit Hilfe des hier beschriebenen Spiegels kann also auf einfache Weise eine Abwicklung der Mantelfläche erzeugt werden. Bei herkömmlichen Verfahren müssten die Stirn- und Mantelfläche eines Gegenstands separat geprüft werden. Außerdem wäre es zur Abtastung der Mantelfläche erforderlich, eine Relativdrehung zwischen Kamera und Gegenstand zu realisieren, beispielsweise diesen um eine Achse rotieren zu lassen. Die Mantelfläche kann dann beispielsweise mit Hilfe einer Zeilenkamera abgetastet werden.

Mit Hilfe konischer Spiegel ist es außerdem möglich, Ausnehmungen, insbesondere zylindrische oder näherungsweise zylindrische Bohrungen zu inspizieren. Hierzu wird dann ein Spiegel verwendet, der eine konische Außenfläche aufweist, die sich in Richtung auf die Kamera verjüngt.

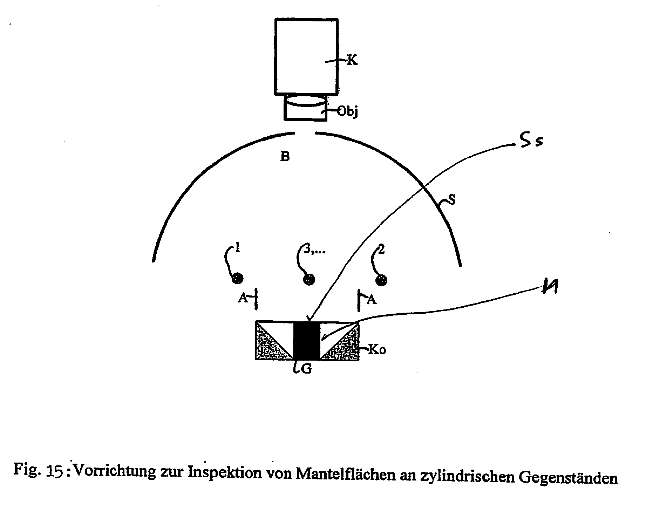

Figur 15 zeigt ein erstes Ausführungsbeispiel einer Vorrichtung zur Inspektion von Mantelflächen an zylindrischen oder näherungsweise zylindrischen Gegenständen.

Der Grundaufbau der Vorrichtung entspricht dem oben erläuterten. Innerhalb eines Streukörpers S ist der Gegenstand G angeordnet. Er wird durch mindestens eine Lichtquelle beleuchtet. Hier sind drei Lichtquellen 1, 2 und 3 dargestellt, außerdem eine oben beschriebene Abschattung A, die die direkte Beleuchtung des Gegenstands G verhindert.

Der zylindrische Gegenstand G steht aufrecht, sodass also seine Mittelachse durch das Objektiv Obj der Kamera K verläuft, die die Stirnseite Ss des Gegenstandes G aufnimmt.

Der Gegenstand G ist im Inneren eines speziell ausgebildeten Spiegels, hier eines Spiegels Ko mit konischer Innenfläche angeordnet, die so ausgerichtet ist, dass die Abbildung der Mantelfläche M des Gegenstands G durch die Öffnung B im Streukörper S von der Kamera K erfasst werden kann. Diese sieht also quasi die Stirnfläche Ss des Gegenstands G und als Ringfläche die umlaufende Mantelfläche M.

Bei dem in Figur 15 dargestellten Ausführungsbeispiel befindet sich der Gegenstand G in dem ringförmigen Spiegel Ko mit der konischen Innenfläche.

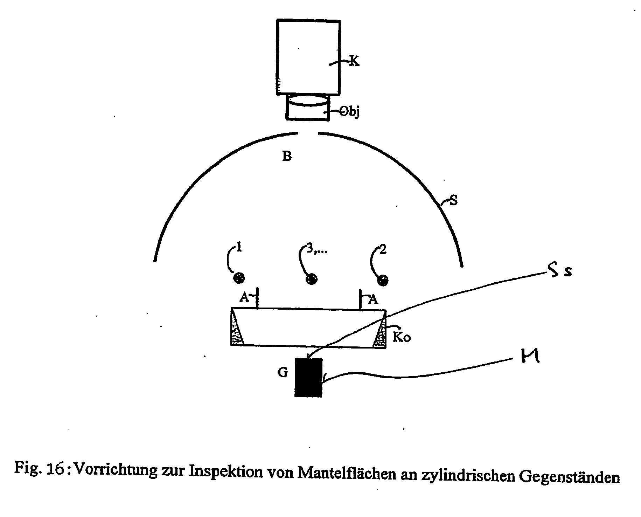

Figur 16 zeigt ein abgewandeltes Ausführungsbeispiel der in Figur 15 wiedergegebenen Vorrichtung. Gleiche und funktionsgleiche Teile sind daher mit gleichen Bezugszeichen versehen.

Das in Figur 16 dargestellte Ausführungsbeispiel unterscheidet sich von dem in Figur 15 durch die Ausgestaltung des speziell ausgeformten Spiegels Ko. Hier ist dessen Innenfläche ebenfalls konisch ausgebildet, jedoch so geneigt, dass die Mantelfläche M des Gegenstandes G, der hier unterhalb des Spiegels Ko angeordnet ist, abgebildet und von der Kamera K erfasst werden kann. Diese erfasst also auch hier die Stirnseite Ss des Gegenstands G und als umlaufende Ringfläche dessen Mantelfläche M.

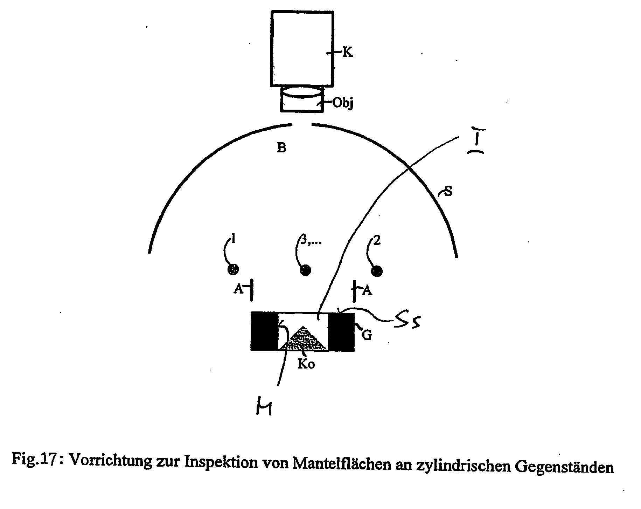

Figur 17 zeigt ein weiteres Ausführungsbeispiel einer Vorrichtung. Auch hier sind gleiche und funktionsgleiche Teile mit gleichen Bezugszeichen versehen, sodass Wiederholungen vermieden werden können.

Die Vorrichtung dient der Erfassung der Stirnseite Ss des Gegenstands G, aber auch dazu, eine innere Mantelfläche M zu erfassen.

Dazu ist hier in einen Innenraum I des Gegenstandes G ein speziell ausgebildeter Spiegel Ko eingeführt, der eine konische äußere Spiegelfläche aufweist. Diese läuft spitz in Richtung auf die Kamera K zu und reflektiert daher das Abbild der Mantelfläche M des Innenraums I in Richtung auf das Objektiv Obj.

Die Kamera K erfasst also einerseits die Stirnseite Ss des Gegenstands G und gleichzeitig eine Mantelfläche M eines Innenraums I des Gegenstandes G. Um ein scharfes Bild zu erhalten, wird ein konisch ausgebildeter Spiegel Ko mit spiegelnder Außenfläche eingesetzt, der vorzugsweise dazu dient, zylindrische beziehungsweise näherungsweise zylindrische Mantelflächen M zu erfassen.

Bei dem in Figur 17 dargestellten Ausführungsbeispiel liegen die Unterseite des Gegenstands G und der Spiegel Ko auf einer gedachten gemeinsamen Ebene. Grundsätzlich ist es aber bei entsprechender Anpassung des Neigungswinkels des konisch ausgebildeten Spiegels Ko möglich, diesen auch unterhalb des Gegenstandes G anzuordnen.

Darüber hinaus ist es schließlich auch möglich, die in Figur 17 dargestellte Vorrichtung mit einem Spiegel zu kombinieren, wie er anhand der Figuren 15 und 16 erläutert wurde. Auf diese Weise können bei ringförmigen Gegenständen G mit einer einzigen Aufnahme dessen Stirnseite Ss eine innere Mantelfläche und auch eine äußere Mantelfläche mit geeigneten Spiegeln erfasst werden.

Die hier beschriebenen Spiegel Ko, die auch als Konusspiegel bezeichnet werden, haben also Spiegelflächen, die als Innenkonus (siehe Figuren 15 und 16) oder als Außenkonus (siehe Figur 17) ausgebildet sind.

Die in den Figuren 15 bis 17 dargestellten Ausführungsbeispiele der Vorrichtung zeichnen sich dadurch aus, dass die zu betrachtenden Innen- oder Außenflächen des Gegenstands G durch den speziell ausgebildeten Spiegel Ko auch beleuchtet werden. Es ist also nicht erforderlich, zusätzliche Leuchtmittel zur Ausleuchtung der zu betrachtenden inneren oder äußeren Seitenflächen des Gegenstandes vorzusehen.

Nach allem zeigt sich also, dass die hier beschriebene Vorrichtung sehr flexibel einsetzbar ist, dass also nicht nur die Oberseite von Gegenständen und Oberflächen betrachtet werden kann, sondern auch äußere oder innere Flächen, die hier als Mantelflächen M bezeichnet wurden. Dabei ist es, wie insbesondere anhand von Figur 17 erläutert, auch möglich, bei einem Erfassungsvorgang sowohl innere als auch äußere Mantelflächen gemeinsam mit einer Stirnseite Ss eines Gegenstands zu erfassen.

Dabei wird deutlich, dass die Vorrichtung insgesamt sehr einfach aufgebaut bleibt, wobei vorteilhafterweise die vorhandenen Lichtquellen auch zur Beleuchtung äußerer und innerer Mantelflächen herangezogen werden können.

## Patentansprüche

1. Vorrichtung zu optischen Formvermessung und/oder optischen Prüfung von Gegenständen (G), mit mindestens einer Kamera (K), mindestens einem Objektiv (Obj), einem undurchsichtigen Streukörper (S) und mit mindestens zwei im inneren des Streukörpers angeordneten Lichtquellen (1,2,3), wobei eine innenseite des Streukörpers (S) von einer oder mehreren der einzeln oder in Gruppen unabhängig voneinander schaltbaren Lichtquellen (1,2,3) beleuchtet ist, **dadurch gekennzeichnet, dass** die mindestens zwei Lichtquellen außerhalb des Zentrums des Streukörpers so platziert sind, dass die Innenseite des Streukörpers entlang einer sich ausgehend von einem Punkt des Äquators des Streukörpers in Richtung zum Nordpol desselben und weiter zu einem gegenüberliegenden Punkt des Äquators erstreckenden Linie mit stetig wachsender oder mit stetig fallender Beleuchtungsstärke beleuchtet ist, wenn mindestens eine der Lichtquellen eingeschaltet ist.

2. Vorrichtung nach Anspruch 1, **dadurch gekennzeichnet, dass** entweder nur zwei Lichtquellen verwendet werden, die auf einer gedachten Durchmesserlinie einander gegenüberliegen oder dass die Lichtquellen an den Ecken eines - vorzugsweise gleichseitigen-Dreiecks oder eines Kreuzes angeordnet sind.

3. Vorrichtung nach einem der vorhergehenden Ansprüche, **dadurch gekennzeichnet, dass** die Beleuchtungsstärke einer ersten der Lichtquellen stetig ansteigt und einer zweiten der Lichtquellen stetig abfällt.

4. Vorrichtung nach einem der vorhergehenden Ansprüche, **dadurch gekennzeichnet, dass** die Lichtquellen einzeln geschaltet werden können.

5. Vorrichtung nach einem der vorhergehenden Ansprüche, **dadurch gekennzeichnet, dass** vier Lichtquellen in Form eines "x" oder eines "+" angeordnet sind.

6. Vorrichtung nach einem der vorhergehenden Ansprüche, **dadurch gekennzeichnet, dass** die Lichtquellen eine lambertsche oder eine andere breite Abstrahlcharakteristik aufweisen.

7. Vorrichtung nach einem der vorhergehenden Ansprüche, **dadurch gekennzeichnet, dass** die Lichtquellen vom Mittelpunkt des Streukörpers einen Abstand aufweisen, der 20% bis 80%, vorzugsweise 30% bis 70%, insbesondere ca. 50% des Abstandes zwischen Mittelpunkt des Streukörpers und dessen Innenfläche ausmacht.

8. Vorrichtung nach einem der vorhergehenden Ansprüche, **dadurch gekennzeichnet, dass** die Lichtquellen in der Äquatorebene oder in einem Abstand zu dieser darüber oder darunter angeordnet sind.

9. Vorrichtung nach Anspruch 8, **dadurch gekennzeichnet, dass** der Hauptstrahl der Lichtquellen gegenüber einer Senkrechten zur Äquatorebene einen Winkel zwischen -90° und +90°, vorzugsweise zwischen -30° und +30°, insbesondere ca. 0° aufweist.

10. Vorrichtung nach einem der vorhergehenden Ansprüche, **dadurch gekennzeichnet, dass** die Lichtquellen getrennt voneinander aktivierbar sind.

11. Vorrichtung nach einem der vorhergehenden Ansprüche, **dadurch gekennzeichnet, dass** der Streukörper die Form einer Halbkugel, einer Kugel, eines Zylinders, eines Ellipsoids, oder eines Quaders aufweist.

12. Vorrichtung nach einem der vorhergehenden Ansprüche **gekennzeichnet durch** mehrere Kameras.

13. Vorrichtung nach einem der vorhergehenden Ansprüche **dadurch gekennzeichnet, dass** mehrere Kameras vorgesehen sind, wobei die Anzahl der Kameras der Zahl der unabhängig schaltbaren Lichtquellen entspricht oder diese überschreitet.

14. Vorrichtung nach einem der vorhergehenden Ansprüche **gekennzeichnet durch** mehrere Sichtöffnungen im Streukörper.

15. Vorrichtung nach einem der vorhergehenden Ansprüche **gekennzeichnet durch** eine Beleuchtungseinrichtung zur Höhenmessung.

16. Vorrichtung nach einem der vorhergehenden Ansprüche **gekennzeichnet durch** eine Beleuchtungseinrichtung, die zumindest eine Linie projizieren kann.

17. Vorrichtung nach einem der vorhergehenden Ansprüche **gekennzeichnet durch** eine Laserlichtquelle, die zumindest eine Linie projizieren kann.

18. Vorrichtung nach einem der vorhergehenden Ansprüche **gekennzeichnet durch** eine Laserlichtquelle, die gleichzeitig mehrere Linien projizieren kann.

19. Vorrichtung nach einem der vorhergehenden Ansprüche **gekennzeichnet durch** eine Beleuchtungseinrichtung zur Streifenprojektion.

20. Vorrichtung nach einem der vorhergehenden Ansprüche **gekennzeichnet durch** ein interferometrisches System.

21. Vorrichtung nach einem der vorhergehenden Ansprüche **dadurch gekennzeichnet, dass** zumindest eine Lichtquellen verschiebbar und/oder drehbar befestigt ist.

22. Vorrichtung nach einem der vorhergehenden Ansprüche **gekennzeichnet durch** eine zusätzliche Lichtquelle, die den Gegenstand direkt beleuchtet und vorzugsweise innen im Streukörper angeordnet ist oder **durch** eine Öffnung im Streukörper in dessen Innenraum leuchtet oder in diesen ragt.

23. Vorrichtung nach einem der vorhergehenden Ansprüche, **gekennzeichnet durch** einen Streukörper mit einer Sichtöffnung, welche identisch ist mit der Eintrittspupille des optischen Gesamtsystems bestehend aus Sichtöffnung und Objektiv.

24. Vorrichtung nach einem der vorhergehenden Ansprüche, **dadurch gekennzeichnet, dass** die Größe einer Sichtöffnung im Streukörper variabel ist.

25. Vorrichtung nach einem der vorhergehenden Ansprüche, **dadurch gekennzeichnet, dass** die Form einer Sichtöffnung im Streukörper variabel ist.

26. Vorrichtung nach einem der vorhergehenden Ansprüche, **dadurch gekennzeichnet, dass** eine Sichtöffnung im Streukörper beweglich ist.

27. Vorrichtung nach einem der vorhergehenden Ansprüche **gekennzeichnet durch** eine rotierenden Sichtöffnung im Streukörper.

28. Vorrichtung nach einem der vorhergehenden Ansprüche **gekennzeichnet durch** eine Kalibriereinrichtung, welche einen Referenzgegenstand umfasst.

29. Vorrichtung nach einem der vorhergehenden Ansprüche **gekennzeichnet durch** eine Kalibriereinrichtung, welche eine Kugel als Referenzgegenstand umfasst.

30. Vorrichtung nach einem der vorhergehenden Ansprüche **gekennzeichnet durch** eine Kalibriereinrichtung, welche einen Spiegel als Referenzgegenstand umfasst.

31. Vorrichtung nach einem der vorhergehenden Ansprüche **gekennzeichnet durch** eine Kalibriereinrichtung, welche einen ebenen Spiegel als Referenzgegenstand umfasst.

32. Vorrichtung nach einem der vorhergehenden Ansprüche **gekennzeichnet durch** einen fluoreszierenden und/ oder phosphoreszierenden Streukörper und/oder eine Beschichtung mit diesen Eigenschaften.

33. Vorrichtung nach einem der vorhergehenden Ansprüche **gekennzeichnet durch** einen Sperrfilter für bestimmte Wellenlängen des Lichts.

34. Vorrichtung nach einem der vorhergehenden Ansprüche **gekennzeichnet durch** einen Sperrfilter für die Wellenlängen mindestens einer der Lichtquellen.

35. Vorrichtung nach einem der vorhergehenden Ansprüche **gekennzeichnet durch** einen Spiegel mit konisch ausgebildeter spiegelnder Innen- und/oder Außenfläche, wobei die Spiegelfläche(n) des Spiegels so ausgebildet und ausgerichtet ist/sind, dass sie eine innere und/oder äußere Mantelfläche des Gegenstandes in Richtung auf die Kamera reflektiert/reflektieren, sodass diese die Stirnfläche des Gegenstandes, die innere und/oder äußere Mantelfläche des Gegenstandes erfasst.

36. Vorrichtung nach Anspruch 35, **dadurch gekennzeichnet, dass** der Spiegel und der zu betrachtende Gegenstand auf einer Ebene angeordnet sind.

37. Vorrichtung nach Anspruch 35, **dadurch gekennzeichnet, dass** der Spiegel und der Gegenstand auf unterschiedlichen Ebenen angeordnet sind.

## Claims

1. Device for optically measuring shapes and/or optically examining objects (G), comprising at least one camera (K), at least one lens (Obj), an opaque scattering body (S) and at least two light sources (1, 2, 3) disposed in the inside of the scattering body, wherein an inner side of the scattering body (S) is illuminated by one or several of the single or in groups independently of one another switchable light sources (1, 2, 3), **characterized in that** the at least two light sources are arranged outside the centre of the scattering body such that, when at least one of the light sources is switched on, the inner side of the scattering body is illuminated with continuously increasing or with continuously decreasing brightness level along a line extending from one point of the equator of the scattering body in the direction of the north pole thereof and further to an opposite point of the equator.

2. Device according to claim 1, **characterized in that** either only two light sources are used, which are disposed opposite from one another on an imaginary diameter line, or that the light sources are disposed at the corners of a - preferably equilateral - triangle or cross.

3. Device according to any one of the preceding claims, **characterized in that** the brightness level of a first of the light sources continuously increases and of a second of the light sources continuously decreases.

4. Device according to any one of the preceding claims, **characterized in that** the light sources can be switched independently from one another.

5. Device according to any one of the preceding claims, **characterized in that** four light sources are disposed in the shape of an "x" or of a "+".

6. Device according to any one of the preceding claims, **characterized in that** the light sources have Lambert's or another wide emission characteristic.

7. Device according to any one of the preceding claims, **characterized in that** the light sources are disposed at a distance from the centre of the scattering body, the distance preferably being from 20% to 80%, preferably 30% to 70 %, particularly approximately 50% of the distance between the centre of the scattering body and the inside surface thereof.

8. Device according to any one of the preceding claims, **characterized in that** the light sources are disposed in the equator plane or at a distance thereto above or below.

9. Device according to claim 8, **characterized in that** the principal ray of the light sources has an angle between -90° and +90°, preferably between -30° and +30°, particularly approximately 0° in relation to a perpendicular of the equator plane.

10. Device according to any one of the preceding claims, **characterized in that** the light sources can be activated independently from one another.

11. Device according to any one of the preceding claims, **characterized in that** the scattering body has the shape of a hemisphere, a sphere, a cylinder, an ellipsoid or of a cuboid.

12. Device according to any one of the preceding claims, **characterized by** several cameras.

13. Device according to any one of the preceding claims, **characterized in that** several cameras are provided, the number of cameras corresponding to or exceeding the number of independently switchable light sources.

14. Device according to any one of the preceding claims, **characterized by** several sight openings in the scattering body.

15. Device according to any one of the preceding claims, **characterized by** an illumination device for height measurement.

16. Device according to any one of the preceding claims, **characterized by** an illumination device, which can project at least one line.

17. Device according to any one of the preceding claims, **characterized by** a laser light source, which can project at least one line.

18. Device according to any one of the preceding claims, **characterized by** a laser light source, which can simultaneously project several lines.

19. Device according to any one of the preceding claims, **characterized by** an illumination device for fringe projection.

20. Device according to any one of the preceding claims, **characterized by** an interferometric system.

21. Device according to any one of the preceding claims, **characterized in that** at least one light source is mounted displaceably and/or rotatably.

22. Device according to any one of the preceding claims, **characterized by** an additional light source, which directly illuminates the object and is preferably disposed on the inside of the scattering body or shines into the inside thereof or protrudes therein through an orifice in the scattering body.

23. Device according to any one of the preceding claims, **characterized by** a scattering body with a sight opening, which is identical to the entrance pupil of the overall optical system, consisting of sight opening and lens.

24. Device according to any one of the preceding claims, **characterized in that** the size of a sight opening in the scattering body is variable.

25. Device according to any one of the preceding claims, **characterized in that** the shape of a sight opening in the scattering body is variable.

26. Device according to any one of the preceding claims, **characterized in that** a sight opening in the scattering body is displaceable.

27. Device according to any one of the preceding claims, **characterized by** a rotatable sight opening in the scattering body.

28. Device according to any one of the preceding claims, **characterized by** a calibration device including a reference object.

29. Device according to any one of the preceding claims, **characterized by** a calibration device including a sphere as a reference object.

30. Device according to any one of the preceding claims, **characterized by** a calibration device including a mirror as a reference object.

31. Device according to any one of the preceding claims, **characterized by** a calibration device including a level mirror as a reference object.

32. Device according to any one of the preceding claims, **characterized by** a fluorescent and/or phosphorescent scattering body and/or a coating with such properties.

33. Device according to any one of the preceding claims, **characterized by** a blocking filter for certain wavelengths of light.

34. Device according to any one of the preceding claims, **characterized by** a blocking filter for the wavelengths of at least one of the light sources.

35. Device according to any one of the preceding claims, **characterized by** a mirror with a conical specular interior and/or exterior surface, the mirror surface(s) of the mirror being configured and oriented such that they reflect an interior and/or exterior circumferential area of the object in the direction of the camera, so that the camera takes the front face of the object, the interior and/or exterior circumferential area of the object.

36. Device according to claim 35, **characterized in that** the mirror and the object to be examined are disposed on one plane.

37. Device according to claim 35, **characterized in that** the mirror and the object are disposed on different planes.

## Revendications

1. Dispositif de mesure de forme optique et/ou de contrôle optique d'objets (G), comprenant au moins une caméra (K), au moins un objectif (Obj), un corps de dispersion opaque (S) et comprenant au moins deux sources lumineuses (1, 2, 3) disposées à l'intérieur du corps de dispersion, dans lequel un côté interne du corps de dispersion (S) est éclairé par une ou plusieurs des sources lumineuses (1, 2, 3) pouvant être commutables individuellement ou en groupes indépendamment les unes des autres, **caractérisé en ce que** les au moins deux sources lumineuses sont placées en dehors du centre du corps de dispersion de sorte que le côté interne du corps de dispersion est éclairé le long d'une ligne s'étendant en partant d'un point de l'équateur du corps de dispersion en direction du pôle nord de celui-ci et ensuite vers un point opposé de l'équateur avec une intensité d'éclairage à croissance continue ou à décroissance continue lorsqu'au moins une des sources lumineuses est allumée.

2. Dispositif selon la revendication 1, **caractérisé en ce que** soit deux sources lumineuses seulement sont utilisées, lesquelles s'opposent l'une à l'autre sur une ligne diamétrale imaginaire, soit que les sources lumineuses sont disposées aux coins d'un triangle, de préférence équilatéral, ou d'une croix.

3. Dispositif selon l'une quelconque des revendications précédentes, **caractérisé en ce que** l'intensité d'éclairage d'une première des sources lumineuses augmente en continu et d'une deuxième des sources lumineuses chute en continu.

4. Dispositif selon l'une quelconque des revendications précédentes, **caractérisé en ce que** les sources lumineuses peuvent être commutables individuellement.

5. Dispositif selon l'une quelconque des revendications précédentes, **caractérisé en ce que** quatre sources lumineuses sont disposées sous la forme d'un « x » ou d'un « + ».

6. Dispositif selon l'une quelconque des revendications précédentes, **caractérisé en ce que** les sources lumineuses présentent une caractéristique de rayonnement lambertienne ou une autre caractéristique de rayonnement large.

7. Dispositif selon l'une quelconque des revendications précédentes, **caractérisé en ce que** les sources lumineuses présentent un écart du point médian du corps de dispersion qui représente 20 % à 80 %, de préférence 30 % à 70 %, notamment environ 50 % de l'écart entre le point médian du corps de dispersion et sa surface interne.

8. Dispositif selon l'une quelconque des revendications précédentes, **caractérisé en ce que** les sources lumineuses sont disposées dans le plan d'équateur ou à un écart de celui-ci au-dessus ou en dessous de celui-ci.

9. Dispositif selon la revendication 8, **caractérisé en ce que** le rayon principal des sources lumineuses par rapport à une verticale au plan d'équateur présente un angle compris entre -90° et +90°, de préférence entre -30° et +30°, notamment d'environ 0°.

10. Dispositif selon l'une quelconque des revendications précédentes, **caractérisé en ce que** les sources lumineuses peuvent être activées séparément les unes des autres.

11. Dispositif selon l'une quelconque des revendications précédentes, **caractérisé en ce que** le corps de dispersion présente la forme d'une hémisphère, d'une sphère, d'un cylindre, d'un ellipsoïde ou d'un parallélépipède rectangle.

12. Dispositif selon l'une quelconque des revendications précédentes, **caractérisé par** plusieurs caméras.

13. Dispositif selon l'une quelconque des revendications précédentes, **caractérisé en ce que** plusieurs caméras sont prévues, dans lequel le nombre de caméras correspond au nombre de sources lumineuses pouvant être commutables indépendamment ou dépasse celui-ci.

14. Dispositif selon l'une quelconque des revendications précédentes, **caractérisé par** plusieurs ouvertures visuelles dans le corps de dispersion.

15. Dispositif selon l'une quelconque des revendications précédentes, **caractérisé par** un dispositif d'éclairage pour la mesure de hauteur.

16. Dispositif selon l'une quelconque des revendications précédentes, **caractérisé par** un dispositif d'éclairage qui peut projeter au moins une ligne.

17. Dispositif selon l'une quelconque des revendications précédentes, **caractérisé par** une source de lumière laser qui peut projeter au moins une ligne.

18. Dispositif selon l'une quelconque des revendications précédentes, **caractérisé par** une source de lumière laser qui peut projeter simultanément plusieurs lignes.

19. Dispositif selon l'une quelconque des revendications précédentes, **caractérisé par** un dispositif d'éclairage pour la projection de rayures.

20. Dispositif selon l'une quelconque des revendications précédentes, **caractérisé par** un système interférométrique.

21. Dispositif selon l'une quelconque des revendications précédentes, **caractérisé en ce qu'**au moins une source lumineuse est fixée de manière coulissante et/ou rotative.

22. Dispositif selon l'une quelconque des revendications précédentes, **caractérisé par** une source lumineuse supplémentaire qui éclaire directement l'objet et est de préférence disposée à l'intérieur du corps de dispersion ou rayonne à travers une ouverture dans le corps de dispersion dans son espace interne ou avance dans celui-ci.

23. Dispositif selon l'une quelconque des revendications précédentes, **caractérisé par** un corps de dispersion avec une ouverture visuelle qui est identique à la pupille d'entrée du système optique global constitué d'une ouverture visuelle et d'un objectif.

24. Dispositif selon l'une quelconque des revendications précédentes, **caractérisé en ce que** la taille d'une ouverture visuelle dans le corps de dispersion est variable.

25. Dispositif selon l'une quelconque des revendications précédentes, **caractérisé en ce que** la forme d'une ouverture visuelle dans le corps de dispersion est variable.

26. Dispositif selon l'une quelconque des revendications précédentes, **caractérisé en ce qu'**une ouverture visuelle dans le corps de dispersion est mobile.

27. Dispositif selon l'une quelconque des revendications précédentes, **caractérisé par** une ouverture visuelle rotative dans le corps de dispersion.

28. Dispositif selon l'une quelconque des revendications précédentes, **caractérisé par** un dispositif d'étalonnage qui comprend un objet de référence.

29. Dispositif selon l'une quelconque des revendications précédentes, **caractérisé par** un dispositif d'étalonnage qui comprend une sphère comme objet de référence.

30. Dispositif selon l'une quelconque des revendications précédentes, **caractérisé par** un dispositif d'étalonnage qui comprend un miroir comme objet de référence.

31. Dispositif selon l'une quelconque des revendications précédentes, **caractérisé par** un dispositif d'étalonnage qui comprend un miroir plan comme objet de référence.

32. Dispositif selon l'une quelconque des revendications précédentes, **caractérisé par** un corps de dispersion fluorescent et/ou phosphorescent et/ou un revêtement avec ces propriétés.

33. Dispositif selon l'une quelconque des revendications précédentes, **caractérisé par** un filtre d'arrêt pour certaines longueurs d'onde de la lumière.

34. Dispositif selon l'une quelconque des revendications précédentes, **caractérisé par** un filtre d'arrêt pour les longueurs d'onde d'au moins une des sources lumineuses.

35. Dispositif selon l'une quelconque des revendications précédentes, **caractérisé par** un miroir avec une surface interne et/ou externe réfléchissante réalisée de manière conique, dans lequel la/les surface(s) de(s) miroir(s) du miroir est/sont réalisée(s) et installée(s) de sorte qu'elle(s) réfléchit/réfléchissent une surface d'enveloppe interne et/ou externe de l'objet en direction de la caméra, de sorte que celle-ci détecte la surface frontale de l'objet, la surface d'enveloppe interne et/ou externe de l'objet.

36. Dispositif selon la revendication 35, **caractérisé en ce que** le miroir et l'objet à considérer sont disposés sur un plan.

37. Dispositif selon la revendication 35, **caractérisé en ce que** le miroir et l'objet sont disposés sur différents plans.
